# EUROPEAN PATENT APPLICATION

(11) **EP 1 276 103 A2**
(43) Date of publication of application: **15.01.2003**
(21) Application number: 02254920.8
(22) Date of filing: 12.07.2002
(51) Int. Cl.: G11B 7/09

(54) **Optical pickup with vibration suppression of lens holder**

(30) Priority: 12.07.2001 JP 2001211587
(71) Applicant: Mitsumi Electric Co., Ltd., Chofu-shi, Tokyo (JP)
(72) Inventor: Hori, Ken'ichi, c/o Mitsumi Electric Co. Ltd., Atsugi-shi, Kanagawa (JP); Takeuchi, Toshio, c/o Mitsumi Electric Co. Ltd., Atsugi-shi, Kanagawa (JP)
(74) Representative: Moir, Michael Christopher

(57) **Abstract**

An optical pickup includes a lens holder (10), an object lens (31), and focusing and tracking coils (12, 13, 14) for electromagnetically driving the lens holder in focusing and tracking directions (FC, TR), respectively. The focusing and the tracking coils produce driving forces having acting points coincident in location with each other.

## Description

### Background of the Invention

This invention relates to an optical pickup for use in an optical disc drive for recording/reproducing data to/from an optical recording medium such as an optical disc.

A wide variety of optical discs have been known. For example, an audio CD (CD-DA: Compact Disc-Digital Audio), a CD-ROM (Compact Disc-Read Only Memory), a CD-R (Compact Disc-Recordable), a CD-RW (Compact Disc-ReWritable), a DVD-Audio (Digital Versatile Disc-Audio), a DVD-Video (Digital Versatile Disc-Video), a DVD-ROM (Digital Versatile Disc-Read Only Memory), an SACD (Super Audio Compact Disc), a DVD-ROM (Digital Versatile Disc-Read Only Memory), a DVD-R (Digital Versatile Disc-Recordable), a DVD+R (Digital Versatile Disc+Recordable), a DVD-RAM (Digital Versatile Disc-Random Access Memory), a DVD-RW (Digital Versatile Disc-ReWritable), or a DVD+RW (Digital Versatile Disc+ReWritable) has been known as the optical disc.

Generally, an optical pickup of the type comprises a laser source for generating a laser beam and an optical system for leading the laser beam generated by the laser source to the optical disc. For the optical disc such as the CD-R, not only a data reading operation but also a data writing operation is carried out. Therefore, in the optical pickup for the optical disc, the power level of the laser beam emitted from the laser source is changed between the data reading operation and the data writing operation. The laser beam emitted from the laser source is led through the optical system, i.e., through a diffraction grating, a beam splitter, a collimating lens, and an object lens to be irradiated to a surface of the optical disc. The laser beam is reflected by the optical disk and is led through the optical system, i.e., through the object lens, the collimating lens, and the beam splitter to be received by a PD (Photo Diode) as a light receiving device.

Recently, various electronic apparatuses capable of at least reproducing the DVD have been developed and sold. Such electronic apparatuses include not only an exclusive DVD-video player but also a personal computer, a TV (TeleVision set)-game apparatus, and so on. Each of those electric apparatuses has an optical pickup adapted to the DVD. Because the DVD has a higher recording density as compared with other optical discs such as the CD, the optical pickup adapted to the DVD is required to operate with higher precision than an existing optical pickup for the CD.

Next, description will be made about a typical existing optical pickup as prior art related to this invention. The optical pickup has a lens holder with an object lens mounted thereon, a damper base supporting the lens holder through four suspension wires in a manner such that the lens holder is movable, and a yoke supporting the damper base.

The yoke is provided with a pair of permanent magnets. The permanent magnets serve as a first element of a magnet-coil structure for moving the lens holder in tracking and focusing directions and by the use of magnetic force.

On the other hand, the lens holder is provided with a focusing coil and a tracking coil. A combination of the focusing coil and the tracking coil serves as a second element of the above-mentioned magnet-coil structure and, cooperating with the permanent magnets, moves the lens holder in the tracking and the focusing directions by the use of the magnetic force.

In the above-mentioned existing optical pickup, vibration suppression of the lens holder is insufficient, and unnecessary or undesired vibration called pitching and rolling may occur.

The cause of such undesired vibration will be described. The focusing coil and the tracking coil produce driving forces having acting points different in location from each other. Therefore, an unnecessary moment is produced and acts on the lens holder to tilt the object lens. As a consequence, optical characteristics of the optical pickup are spoiled or degraded.

The above-mentioned disadvantage is a serious problem particularly for the optical pickup adapted to the DVD because such optical pickup must operate with higher precision as compared with the optical pickup for the CD, as described above.

### Summary of the Invention:

It is therefore an object of the preferred embodiment of this invention to provide an optical pickup with exceptional vibration suppression of a lens holder.

According to an aspect of this invention, there is provided an optical pickup which is for use in an optical disc drive for recording/reproducing data to/from an optical recording medium and which comprises a lens holder movably supported by suspension wires, an object lens attached to the lens holder, and focusing and tracking coils attached to the lens holder for electromagnetically driving the lens holder in focusing and tracking directions, respectively, in cooperation with a permanent magnet. The focusing and the tracking coils produce magnetic driving forces having acting points coincident in location with each other.

### Brief Description of the Drawings:

Preferred features of the present invention will now be described, by way of example only, with reference to the accompanying drawings, in which:-
Fig. 1 is a plan view of a characteristic part of an existing optical pickup, partially in section;
Figs. 2A, 2B and 2C are views for describing the operation of the optical pickup shown in Fig. 1, Fig. 2A being a plan view of a focusing coil, Fig. 2B, a side view of the focusing coil, and Fig. 2C, a sectional view of the focusing coil and a tracking coil;
Fig. 3 is a plan view of a characteristic part of an optical pickup according to an embodiment of this invention, partially in section; and
Figs. 4A, 4B and 4C are view for describing the operation of the optical pickup shown in Fig. 3, Fig. 4A being a plan view of a focusing coil, Fig. 4B, a side view of the focusing coil, and Fig. 4C, a sectional view of the focusing coil and a tracking coil.

### Description of the Preferred Embodiment:

In order to facilitate an understanding of the present invention, description will first be made about a typical existing optical pickup related to this invention,with reference to the drawing.

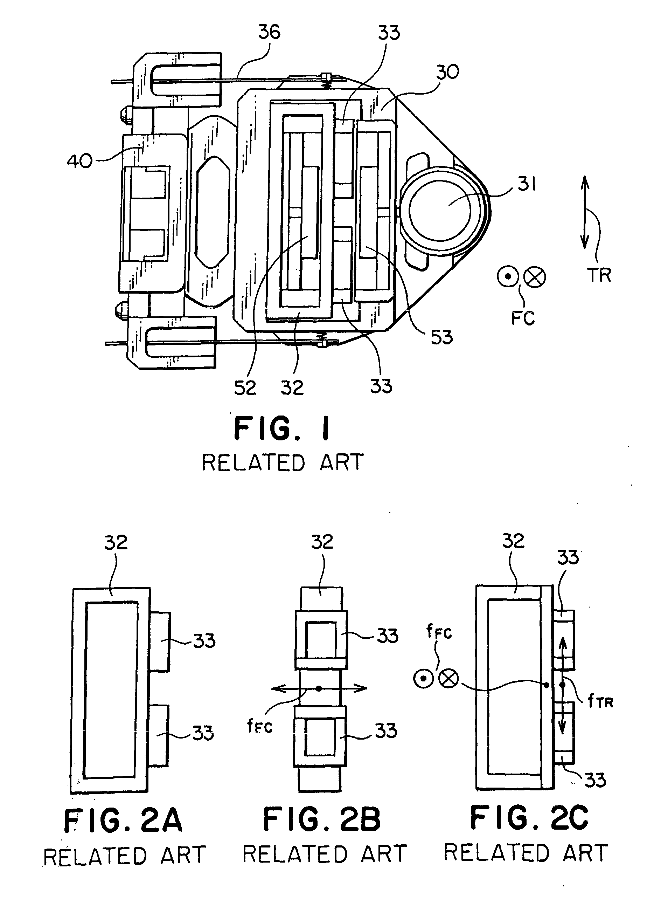

Referring to Fig. 1, the optical pickup has a lens holder 30 with an object lens 31 mounted thereon, a damper base 40 supporting the lens holder 30 through four suspension wires (only two of them being illustrated in the figure) in the manner such that the lens holder 30 is movable, and a yoke (not shown) supporting the damper base 40.

The yoke is provided with a pair of permanent magnets 52 and 53. The permanent magnets 52 and 53 serve as a first element of a magnet-coil structure for moving the lens holder 30 in tracking and focusing directions TR and FC by the use of magnetic force.

On the other hand, the lens holder 30 is provided with a focusing coil 32 and a pair of tracking coils 33. A combination of the focusing coil 32 and the tracking coils 33 serves as a second element of the above-mentioned magnet-coil structure and, cooperating with the permanent magnets 52 and 53, moves the lens holder 30 in the tracking and the focusing directions TR and FC by the use of the magnetic force.

In the above-mentioned existing optical pickup shown in Fig. 1, vibration suppression of the lens holder 30 is insufficient and unnecessary or undesired vibration called pitching and rolling may occur.

The cause of such undesired vibration will be described. Referring to Figs. 2A to 2C, the focusing coil 32 and the tracking coils 33 produce driving forces f_{FC} and f_{TR} having acting points different in location from each other (as best shown in Fig. 2C). Therefore, an unnecessary moment is produced and acts on the lens holder 30 to tilt the object lens 31. As a consequence, optical characteristics of the optical pickup are spoiled or degraded.

Thus, the existing optical pickup is disadvantageous as described in the background.

Now, a preferred embodiment of the present invention will be described with reference to the drawing.

A disc drive to which an optical pickup according to the embodiment is applicable is used in a DVD player known in the art.

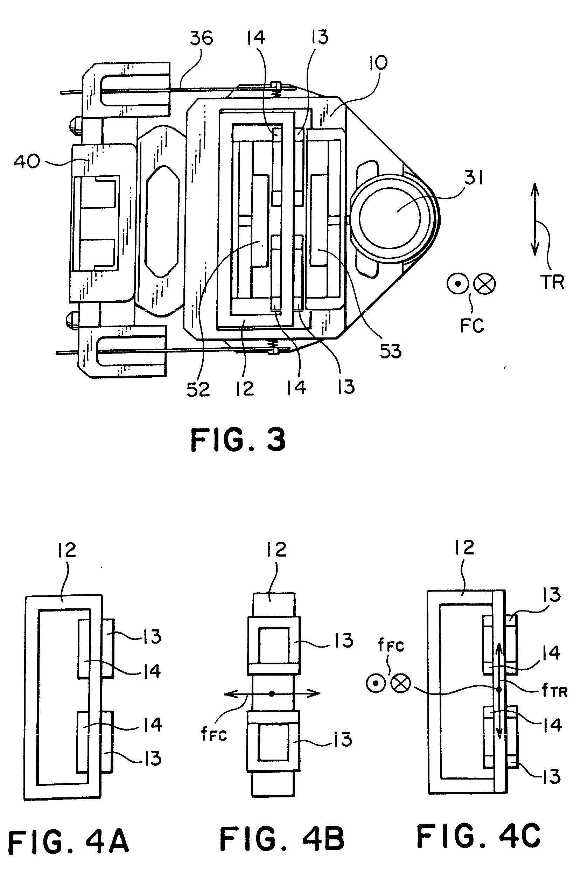

Referring to Fig. 3, an optical pickup has, like the existing optical pickup shown in Fig. 1, a lens holder 10 with an object lens 31 mounted thereon, a damper base 40 supporting the lens holder 30 through four suspension wires (only two of them being illustrated in the figure) in the manner such that the lens holder 10 is movable, and a yoke (not shown) supporting the damper base 40. The yoke is provided with a pair of permanent magnets 52 and 53. The permanent magnets 52 and 53 serve as a first element of a magnet-coil structure for moving the lens holder 30 in tracking and focusing directions TR and FC by the use of magnetic force as driving forces. On the other hand, the lens holder 30 is provided with a focusing coil 12 and a pair of tracking coils which will later be described in detail. A combination of the focusing coil 12 and the tracking coils serve as a second element of the above-mentioned magnet-coil structure and, cooperating with the permanent magnets 52 and 53, moves the lens holder 30 in the tracking and the focusing directions TR and FC by the use of the magnetic force.

In the optical pickup, the focusing coil 12 has a rectangular cylindrical shape which has four side portions. Each of the tracking coils comprises a pair of tracking coil portions 13 and 14. The tracking coil portions 13 and 14 are arranged outside and inside of one of the side portions of the focusing coil 12, respectively, with the one side portion interposed therebetween. The tracking coil portions 13 and 14 are equal in number of turns to each other and therefore have electromagnetic efficiencies equal to each other.

Referring to Figs. 3 and 4A to 4C, the focusing coil 12 and the tracking coils, each of which is composed of the tracking coil portions 13 and 14, produce driving forces f_{FC} and f_{TR} having acting points coincident in location with each other, as best shown in Fig. 4C. Specifically, the driving force f_{FC} by the focusing coil 12 and the driving force f_{TR} by the tracking coil portions 13 and 14 act upon the same location in the focusing coil 12 attached on the lens holder 10. Consequently, any unnecessary moment never acts on the lens holder 10 so that vibration suppression of the lens holder 10 is excellent. Thus, the optical pickup is advantageous for use as the optical pickup adapted to the DVD, which is required to operate with higher precision as compared with the optical pickup for the CD.

In the foregoing embodiment, each of the focusing coil 12 and the tracking coil portions 13 and 14 is a hollow coreless type. However, at least one of these coils may be wound around a bobbin.

While this invention has thus far been described in conjunction with a preferred embodiment thereof, it will now be readily possible for those skilled in the art to put this invention into practice in various other manners. For example, although the description has been directed to the case where the optical pickup is applied to the DVD in the foregoing embodiment, this invention is not restricted thereto but may be applicable to other optical disc drives such as a CD-ROM drive, a CD-R drive, a CD-RW drive, a DVD-RAM drive, a DVD-RW drive, a DVD+RW drive, a MO drive, or a MD drive.

Each feature disclosed in this specification (which term includes the claims) and/or shown in the drawings may be incorporated in the invention independently of other disclosed and/or illustrated features. Reference numerals appearing in the claims are by way of illustration only and should be disregarded when interpreting the scope of the claims.

The text of the abstract filed herewith is repeated here as part of the specification.

An optical pickup includes a lens holder, an object lens, and focusing and tracking coils for electromagnetically driving the lens holder in focusing and tracking directions, respectively. The focusing and the tracking coils produce driving forces having acting points coincident in location with each other.

## Claims

1. An optical pickup for use in an optical disc drive for recording/reproducing data to/from an optical recording medium, said optical pickup comprising a lens holder (10) movably supported by suspension wires, an object lens (31) attached to said lens holder, and focusing coil means and tracking coil means (12, 13, 14) attached to said lens holder for electro-magnetically driving said lens holder in a focusing direction (FC) and a tracking direction (TR), respectively, in cooperation with respective magnet means, **characterized in that** said focusing coil means and said tracking coil means produce driving forces (f_{FC}, f_{TR}) acting through a common point.

2. The optical pickup as claimed in claim 1, wherein the focusing coil means comprises a single focusing coil, and the tracking coil means comprises a pair of tracking coils.

3. The optical pickup as claimed in claim 2, wherein the pair of tracking coils is connected to the focusing coil.

4. The optical pickup as claimed in claim 2 or 3, wherein:
said focusing coil has a rectangular cylindrical shape which has four side portions; and,
each tracking coil comprises a pair of tracking coil portions arranged outside and inside, respectively, of one of said side portions of said focusing coil, said one side portion of said focusing coil being interposed between said pair of tracking coil portions.

5. The optical pickup as claimed in claim 4, wherein the pair of tracking coil portions have an equal number of turns to each other.

6. An optical pickup as claimed in any one of claims 2 to 5, wherein at least one of said focusing and tracking coils is wound around a bobbin.

7. A method for reducing vibration in an optical pickup for use in an optical disc drive for recording/reproducing data to/from an optical recording medium, said optical pickup comprising a lens holder (10) movably supported by suspension wires, an object lens (31) attached to said lens holder, and focusing coil means and tracking coil means (12, 13, 14) attached to said lens holder for electro-magnetically driving said lens holder in a focusing direction (FC) and a tracking direction (TR), respectively, in cooperation with respective magnet means, the method being **characterized by** the step of positioning said focusing coil means and tracking coil means on said lens holder such that said focusing coil means and said tracking coil means produce driving forces (f_{FC}, f_{TR}) acting through a common point.

8. The method as claimed in claim 7, wherein the focusing coil means comprises a single focusing coil and the tracking coil means comprises a pair of tracking coils, and the positioning step includes the step of connecting the pair of tracking coils to the focusing coil.

9. The method as claimed in claim 8, wherein each tracking coil comprises a pair of tracking coil portions, and wherein the positioning step includes the step of arranging each tracking coil on a side portion of the focusing coil such that the pair of tracking coil portions are respectively outside and inside of the side portion of the focusing coil.

10. The method as claimed in claim 9, comprising the further step of arranging that the pair of tracking coil portions have an equal number of turns to each other.
